# EUROPÄISCHE PATENTSCHRIFT

(11) **EP 3 230 600 B1**
(45) Veröffentlichungstag und Bekanntmachung des Hinweises auf die Patenterteilung: **06.01.2021**
(21) Anmeldenummer: 15804065.9
(22) Anmeldetag: 26.11.2015
(51) Int. Cl.: F15B 11/036, F15B 15/14, F16H 61/30, F15B 11/12

(54) **DREISTELLUNGSZYLINDER, INSBESONDERE ALS GETRIEBESTELLER**
THREE POSITION CYLINDER, IN PARTICULAR AS A GEAR SWITCHING ACTUATOR
VÉRIN DE TROIS POSITION, EN PARTICULIER COMME UNE ACTIONNEUR DE TRANSMISSION

(30) Priorität: 13.12.2014 DE 102014018617
(43) Veröffentlichungstag der Anmeldung: 18.10.2017
(73) Patentinhaber: WABCO GmbH, 30453 Hannover (DE)
(72) Erfinder: KELPE, Holger, 30926 Seelze (DE); RUSS, Andreas, 30966 Hemmingen (DE)
(74) Vertreter: Lauerwald, Jörg
(86) Internationale Anmeldenummer: PCT/EP2015/002374
(87) Internationale Veröffentlichungsnummer: WO 2016/091359

(56) Entgegenhaltungen:
- EP-A2- 0 059 853
- EP-A2- 0 064 641
- EP-A2- 0 350 812
- DE-U1-202004 002 221
- US-A- 4 136 445
- US-A1- 2008 047 381

## Beschreibung

Die Erfindung betrifft einen Dreistellungszylinder gemäß dem Oberbegriff des Anspruchs 1. Außerdem betrifft die Erfindung ein Verfahren zur Steuerung.

US 4136445 offenbart ein Druckluftwerkzeug mit einem Dreistellungszylinder, welches als eine Dreileiterkabel-Schneidvorrichtung ausgebildet ist.

DE 20 2004 002 221 U1 betrifft Nicht-ferritischer-, kleinvolumiger, Mulitpositions-, Tandem-Zylinder, geeignet zur Durchführung einer Klauenbewegung in Schweißzangen.

EP 0 350 812 A2 betrifft eine Vorrichtung zum automatischen Schalten mehrstufiger Gangschaltungen von Kraftfahrzeugen und ist hauptsächlich für mit einer automatisch gesteuerten Reibungskupplung ausgerüstete Fahrzeuge geeignet.

EP 0 059 853 A2 offenbart eine Getriebesteuerung mit einem Gangzylinder, einem Bedienungsgerät, einer elektronischen Auswerteschaltung und einem Druckmittelvorrat, wobei der Kolben des Gangzylinders in eine vordere, eine mittlere und eine rückseitige Stellung schaltbar ist.

Aufbau und Wirkungsweise von Dreistellungszylindern sind bekannt. Der Dreistellungszylinder ist über zwei Wegeventile an einen Fluiddruck angeschlossen und kann trotz der Ansteuerung durch nur zwei Ventile drei verschiedene, definierte Positionen einnehmen, nämlich zwei Endstellungen und eine Mittenstellung einer Kolbenstange oder eines Hauptkolbens. Durch einen oder zwei Schleppkolben auf dem Hauptkolben werden in Abhängigkeit von der Kolbenstellung unterschiedliche resultierende Kräfte realisiert. Zum Anfahren der Mittenstellung liegt in beiden Druckräumen des Dreistellungszylinders ein Fluiddruck an, etwa aus einem hydraulischen oder pneumatischen System. Die beiden Wegeventile sind zu den Druckräumen geöffnet, so dass jeweils gleicher Druck anliegt und die Mittenstellung automatisch angefahren wird. In der Mittenstellung gleichen sich die auf den Hauptkolben und die Schleppkolben wirkenden Kräfte aus, so dass eine stabile Position gehalten wird. Nur zum Anfahren der Endstellungen wird eines der Wegeventile umgeschaltet, so dass über dieses umgeschaltete Wegeventil das Fluid in einen Vorrat zurückgelangen kann.

Dreistellungszylinder der genannten Art werden unter anderem als Getriebesteller, insbesondere für automatisierte Getriebe in Kraftfahrzeugen, sogenannte AMT-Getriebe, verwendet. Zur Anpassung an unterschiedliche Stellkräfte kann der Fluiddruck nur in engen Grenzen erhöht werden, auch in Abhängigkeit von dem im Fahrzeug zur Verfügung stehenden Fluiddruck. Alternativ müssen die Kolbenflächen im Dreistellungszylinder vergrößert werden. Entsprechend vergrößert sich der Durchmesser des Dreistellungszylinders und damit seine Bauhöhe (bei liegendem Einbau).

Aufgabe der vorliegenden Erfindung ist die Schaffung eines Dreistellungszylinders mit geringer Bauhöhe und hoher Kraft bzw. erhöhter Kraft bei gleichbleibender Bauhöhe. Vorzugsweise soll eine Kraftverstärkung nicht beim Anfahren der Mittenstellung wirksam sein.

Zur Lösung der Aufgabe weist der erfindungsgemäße Dreistellungszylinder die Merkmale des Anspruchs 1 auf. Der Dreistellungszylinder ist mit einem in Reihe geschalteten Hilfszylinder mit Hilfskolben versehen. Durch die Reihenschaltung vergrößert sich die Bauhöhe nicht, sofern nicht der Hilfszylinder einen größeren Durchmesser aufweist als der Dreistellungszylinder. Die wirksame Kraft ergibt sich durch Addition der im Dreistellungszylinder einerseits und im Hilfszylinder andererseits wirkenden Kräfte.

Erfindungsgemäß ist der Hilfskolben zweiseitig beaufschlagbar. Entsprechend weist der Hilfszylinder zwei Druckräume auf, wie der Dreistellungszylinder. Die Kraftverstärkung ist in beide Bewegungsrichtungen möglich.
Erfindungsgemäß ist der Hilfskolben ein Einfachkolben. Schleppkolben sind im Hilfszylinder nicht vorgesehen. Der Aufbau des Hilfszylinders ist relativ einfach.

Nach der Erfindung ist eine Kolbenstange des Hilfskolbens koaxial zur Kolbenstange eines Kolbens im Dreistellungszylinder angeordnet, wobei die Kolbenstangen miteinander verbunden sind oder funktionelle Teile einer gemeinsamen Kolbenstange sind. Vorzugsweise ist der Hilfskolben als eigenständiges Modul ausgeführt, welches mit dem Dreistellungszylinder verbindbar ist. Vorzugsweise werden dabei die beiden Kolbenstangen miteinander gekoppelt.

Erfindungsgemäß ist ein Fluidsystem vorgesehen, mit dem Druckräume des Hilfskolbens parallel zu Druckräumen des Dreistellungszylinders ansteuerbar sind. Das Fluidsystem kann ein Pneumatiksystem oder ein Hydrauliksystem sein. Beabsichtigt ist das simultane Ansteuern von Dreistellungszylinder und Hilfszylinder, so dass in beiden Zylindern gleiche Drücke, insbesondere zeitgleich, auftreten. Für das Anfahren der Mittenstellung bedeutet dies, dass während dieses Vorgangs die auf beiden Seiten des Hilfskolbens wirksamen Kräfte ausgeglichen sind und somit keine Verstärkung erfolgt, jedenfalls sofern im Hilfszylinder nur der Hilfskolben und ohne Schleppkolben vorgesehen ist.

Vorzugsweise ist ein Fluidsystem mit nur zwei Wegeventilen vorgesehen, insbesondere mit zwei 2/3-Wegeventilen. Die Steuerung des Systems und des Dreistellungszylinders ist dadurch besonders einfach.

Nach einem weiteren Gedanken der Erfindung ist ein Fluidsystem vorgesehen, derart, dass die Verstärkung durch den Hilfskolben nur beim Anfahren von zwei Endstellungen des Dreistellungsventils wirksam ist, nicht beim Anfahren einer Mittenstellung.

Erfindungsgemäß weist der Dreistellungszylinder einen gestuften Zylinder und nur einen Schleppkolben auf. Diese Bauart eines Dreistellungszylinders ist einfacher als eine mit zwei Schleppkolben.

Gegenstand der Erfindung ist auch ein Getriebe mit einer Vorrichtung bzw. einem Dreistellungszylinder der zuvor dargestellten Art, insbesondere für die Verwendung in einem Kraftfahrzeug.

Schließlich ist Gegenstand der Erfindung auch ein Verfahren zur Steuerung des Getriebes oder des Dreistellungszylinders. Erfindungsgemäß werden Dreistellungszylinder und Hilfskolben zeitgleich und in derselben Richtung mit Fluiddruck beaufschlagt. Eine gesonderte Ansteuerung des Hilfskolbens wird nicht benötigt. Es reicht aus, wenn jeweils ein Abzweig einer zur entsprechenden Druckkammer des Dreistellungszylinders führenden Leitung zur korrespondierenden Druckkammer im Hilfszylinder führt.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: ein Schaltbild eines Dreistellungszylinders mit in Reihe geschaltetem Hilfskolben und mit zwei 2/3-Wegeventilen zur Ansteuerung,
- Fig. 2: einen Dreistellungszylinder im Längsschnitt und in linker Endstellung,
- Fig. 3: den Dreistellungszylinder mit Hilfskolben gemäß Fig. 2 in Mittenstellung,
- Fig. 4: den Dreistellungszylinder mit Hilfskolben gemäß Fig. 2 in rechter Endstellung.

Ein als Getriebesteller 10 vorgesehener Dreistellungszylinder 11 ist durch einen in Reihe geschalteten Hilfszylinder 12 ergänzt. Im Dreistellungszylinder 11 ist ein Hauptkolben 13 mit einer Kolbenstange 14 fest (in Axialrichtung unbeweglich) verbunden.

Die Kolbenstange 14 erstreckt sich zugleich durch den Hilfszylinder 12 und ist ebenfalls mit einem Hilfskolben 15 fest (in Axialrichtung unbeweglich) verbunden. Die Kolbenstange 14 erstreckt sich durch den Hilfszylinder 12 hindurch und ist außerhalb desselben mit einem Schalthebel 16 gelenkig verbunden und bewegt diesen zwischen drei Stellungen.

Auf dem Hauptkolben 13 ist ein Schleppkolben 17 verschiebbar angeordnet. Der Dreistellungszylinder 11 weist innenseitig einen umlaufenden Absatz 18 auf. Analog dazu ist der Schleppkolben 17 an seinem Außenumfang mit einem Absatz 19 versehen.

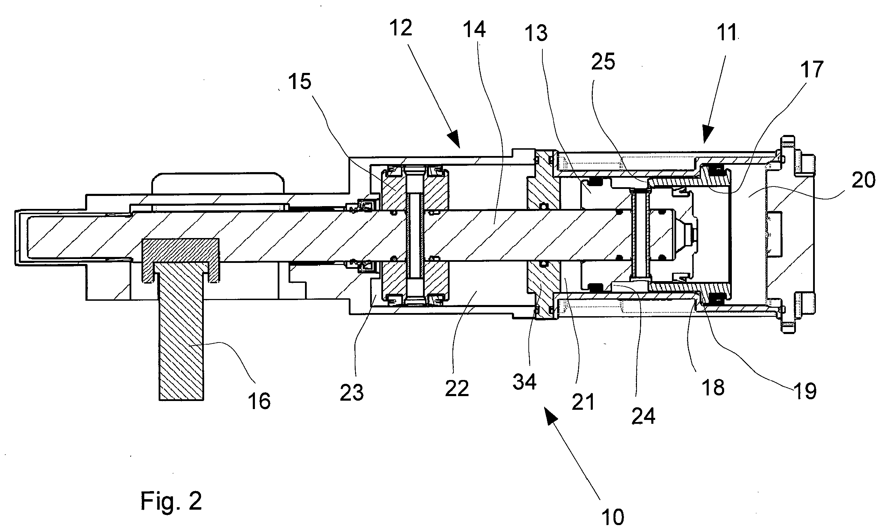

Dreistellungszylinder 11 und Hilfszylinder 12 weisen je zwei Druckräume 20, 21 und 22, 23 auf. In einer linken Endstellung der Kolbenstange 14 gemäß Fig. 2 sind die jeweils linken Druckräume 21, 23 durch Verfahren von Hauptkolben 13 und Hilfskolben 15 relativ klein, während die rechten Druckräume 20, 22 ihr maximal mögliches Volumen einnehmen.

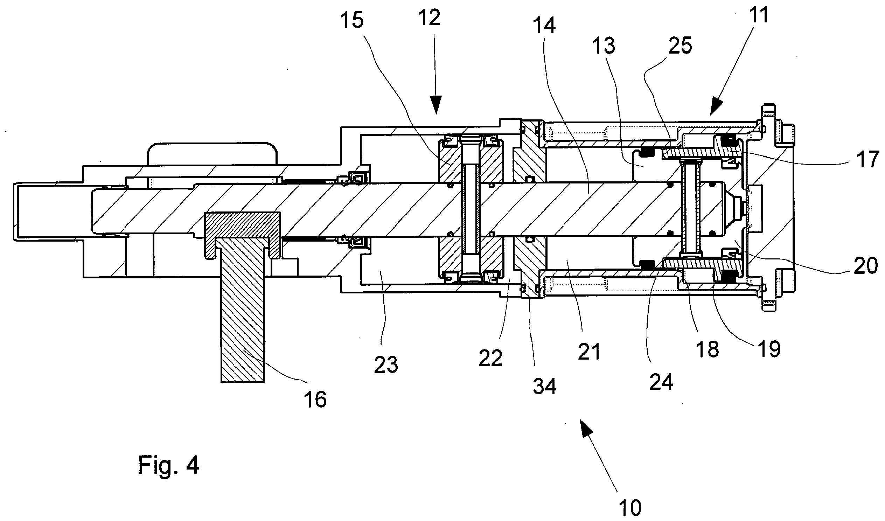

Umgekehrt sind in der rechten Endstellung der Kolbenstange 14 gemäß Fig. 4 die rechten Druckräume 20 und 22 relativ klein, während die linken Druckräume 21 und 23 ihr maximal mögliches Volumen aufweisen.

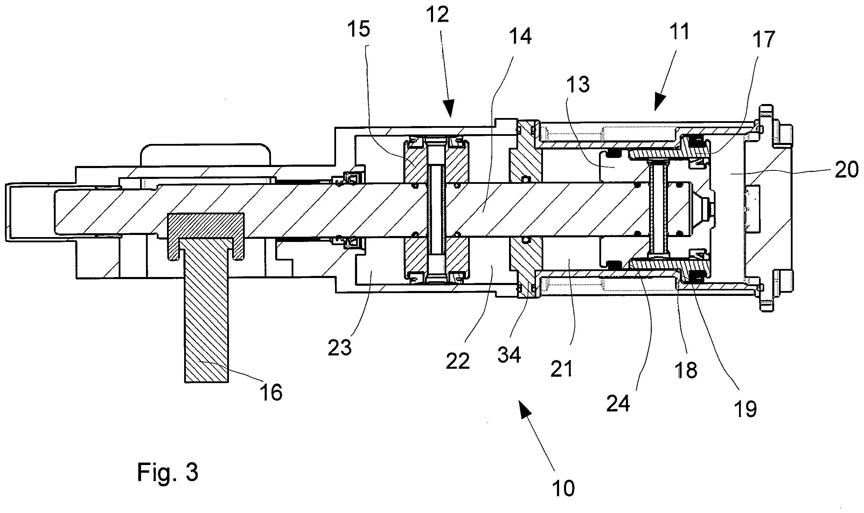

In der Mittenstellung der Kolbenstange 14 gemäß Fig. 3 sind die Druckräume 22, 23 des Hilfszylinders 12 etwa gleich groß. Die Druckräume müssen aber nicht exakt gleich groß sein, da die Mittenstellung des Hilfskolbens 15 von einer wie auch immer berechneten geometrischen Mitte des Hilfszylinders 12 abweichen kann. Wichtig ist nur, dass die Mittenstellung zwischen den Endstellungen liegt und eine sinnvolle Position des Schalthebels 16 zwischen den Endstellungen ermöglicht. Analog gelten diese Überlegungen für die Größe der Druckräume 20, 21.

Der Hauptkolben 13 weist einen umlaufenden Absatz 24 auf, an dem der Schleppkolben 17 mit seiner umlaufenden Stirnseite 25 in der Mittenstelllung gemäß Fig. 3 und in der rechten Endstellung gemäß Fig. 4 anliegt. Dem gegenüber berühren sich die Absätze 18, 19 von Zylinder 11 und Schleppkolben 17 in der Mittenstellung gemäß Fig. 3 und in der linken Endstellung gemäß Fig. 2.

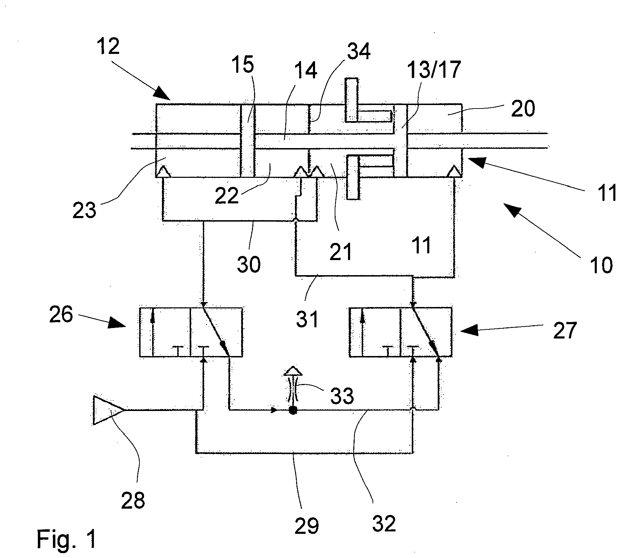

Die Ansteuerung von Dreistellungszylinder 11 mit Hilfszylinder 12 über zwei 2/3-Wegeventile illustriert Fig. 1. Gezeigt ist die Mittenstellung gemäß Fig. 3. Die Ventile 26, 27 befinden sich jeweils in einer Rücklaufposition. Das heißt, dass an den Zylindern 11, 12 kein Druck anliegt.

Ein unter Druck stehendes Fluid ist aus einer Quelle 28, insbesondere einem Druckluftsystem, einer Verbindungsleitung 29 zwischen den Ventilen 26, 27 zuführbar. Bei durchgeschalteten Ventilen 26, 27, das heißt, sofern diese sich in einer nicht gezeigten Vorlaufposition befinden, liegt Druck auch an Verbindungsleitungen 30, 31 an. Verbindungsleitung 30 verbindet den linken Druckraum 23 des Hilfszylinders 12 mit dem linken Druckraum 21 des Zylinders 11. Analog ist der rechte Druckraum 22 des Hilfszylinders 12 über die Verbindungsleitung 31 mit dem rechten Druckraum 20 des Zylinders 11 verbunden.

Sofern beide Ventile 26, 27 zugleich in der nicht gezeigten Vorlaufposition sind, wird die Kolbenstange 14 automatisch aus jeder anderen Position in die Mittenstellung gemäß Fig. 3 und Fig. 1 bewegt.

Die linke Endstellung gemäß Fig. 2 wird angefahren durch die nicht gezeigte Vorlaufposition des Ventils 27 in Verbindung mit der in Fig. 1 gezeigten Rücklaufposition des Ventils 26. Es liegt dann in den rechten Druckräumen 20, 22 voller Druck an, so dass die Kolben 13, 15 und 17 mit der Kolbenstange 14 ganz nach links bewegt werden. Das in den Druckräumen 21 und 23 befindliche Fluid wird von dort verdrängt und gelangt über das Ventil 26 in eine weitere Verbindungsleitung zwischen den Ventilen 26, 27 und von dort über eine Drossel 33 ins Freie oder in einen Niederdruckvorrat.

In umgekehrter Weise nimmt die Kolbenstange 14 die rechte Endstellung ein, sofern das Ventil 26 in die nicht gezeigte Vorlaufposition geschaltet ist und das Ventil 27 die in Fig. 1 gezeigte Rücklaufposition einnimmt.

Zwischen Dreistellungszylinder 11 und Hilfszylinder 12 ist eine Trennwand 34 angeordnet, die mittig mit einer Öffnung zum abgedichteten Durchtritt der Kolbenstange 14 versehen ist.

Der gezeigte Getriebesteller 10 ermöglicht bei relativ flacher Bauform (Abmessung quer zur Längsrichtung der Kolbenstange 14) eine hohe Verstärkung der Druckkräfte für die Bewegung der Kolbenstange 14 in die beiden Endstellungen. Zugleich findet eine Verstärkung bei Bewegung der Kolbenstange 14 in die Mittenstellung nicht statt.

### Bezugszeichenliste (Bestandteil der Beschreibung)

- 10: Getriebesteller
- 11: Dreistellungszylinder
- 12: Hilfszylinder
- 13: Hauptkolben
- 14: Kolbenstange
- 15: Hilfskolben
- 16: Schalthebel
- 17: Schleppkolben
- 18: Absatz (Dreistellungszylinder)
- 19: (Schleppkolben)
- 20: Druckraum
- 21: Druckraum
- 22: Druckraum
- 23: Druckraum
- 24: Absatz (Hauptkolben)
- 25: Stirnseite
- 26: Ventil
- 27: Ventil
- 28: Druckluftquelle
- 29: Verbindungsleitung
- 30: Verbindungsleitung
- 31: Verbindungsleitung
- 32: Verbindungsleitung
- 33: Drossel

## Patentansprüche

1. Dreistellungszylinder (11), welcher als Getriebesteller eines automatisierten Getriebes eines Kraftfahrzeuges ausgebildet ist, mit einem in Reihe geschalteten Hilfszylinder (12) mit Hilfskolben (15),
wobei
der Hilfskolben (15) zweiseitig beaufschlagbar ist, wobei
der Hilfskolben (15) ein Einfachkolben ist, wobei
eine Kolbenstange des Hilfskolbens (15) koaxial zur Kolbenstange eines Hauptkolbens (13) im Dreistellungszylinder angeordnet ist, wobei die Kolbenstangen miteinander verbunden sind oder funktionelle Teile einer gemeinsamen Kolbenstange (14) sind, mit einem Fluidsystem, mit dem Druckräume (22, 23) des Hilfszylinders (12) parallel zu Druckräumen (20, 21) des Dreistellungszylinders (11) ansteuerbar sind, **dadurch gekennzeichnet, dass** der Dreistellungszylinder (11) gestuft ausgebildet und nur einen Schleppkolben (17) aufweist, der auf dem Hauptkolben (13) verschiebbar angeordnet ist, und
wobei der Hilfszylinder (12) keinen Schleppkolben aufweist.

2. Dreistellungszylinder nach Anspruch 1, **gekennzeichnet durch** das Fluidsystem mit nur zwei Wegeventilen (26, 27).

3. Dreistellungszylinder nach Anspruch 1 oder 2, **gekennzeichnet durch** das Fluidsystem derart, dass die Verstärkung durch den Hilfskolben (15) nur beim Anfahren von zwei Endstellungen des Dreistellungszylinders wirksam ist, nicht beim Anfahren einer Mittenstellung.

4. Verfahren zur Steuerung eines Dreistellungszylinders nach einem der voranstehenden Ansprüche, **dadurch gekennzeichnet, dass** Dreistellungszylinder (11) und Hilfskolben (15) im Hilfszylinder (12) zeitgleich und in derselben Richtung mit Fluiddruck beaufschlagt werden.

## Claims

1. Three-position cylinder (11), which is designed as a transmission actuator of an automated transmission of a motor vehicle, with a series-connected auxiliary cylinder (12) with an auxiliary piston (15),
wherein
the auxiliary piston (15) can be acted upon on two sides, wherein
the auxiliary piston (15) is a single piston, wherein
a piston rod of the auxiliary piston (15) is arranged coaxially in relation to the piston rod of a main piston (13) in the three-position cylinder, wherein the piston rods are connected to one another or functional parts of a common piston rod (14),
with a fluid system, with which pressure chambers (22, 23) of the auxiliary cylinder (12) can be activated parallel to the pressure chambers (20, 21) of the three-position cylinder (11),
**characterized in that**
the three-position cylinder (11) is formed in a stepped manner and has just one drag piston (17), which is displaceably arranged on the main piston (13), and wherein the auxiliary cylinder (12) has no drag piston.

2. Three-position cylinder according to Claim 1, **characterized by** the fluid system with only two directional control valves (26, 27).

3. Three-position cylinder according to Claim 1 or 2, **characterized by** the fluid system in such a way that the boosting by the auxiliary piston (15) is only effective when two end positions of the three-position cylinder are adopted, not when the midway position is adopted.

4. Method for controlling a three-position cylinder according to one of the preceding claims, **characterized in that** fluid pressure is applied to the three-position cylinder (11) and the auxiliary piston (15) in the auxiliary cylinder (12) at the same time and in the same direction.

## Revendications

1. Cylindre à trois positions (11), réalisé sous forme d'actionneur de boîte de vitesses d'une boîte de vitesses automatisée d'un véhicule automobile, comprenant un cylindre auxiliaire (12) monté en série, avec un piston auxiliaire (15),
le piston auxiliaire (15) pouvant être sollicité de deux côtés,
le piston auxiliaire (15) étant un piston simple, une tige de piston du piston auxiliaire (15) étant disposée coaxialement par rapport à la tige de piston d'un piston principal (13) dans le cylindre à trois positions, les tiges de piston étant connectées l'une à l'autre ou étant des pièces fonctionnelles d'une tige de piston commune (14), avec un système fluidique avec lequel des chambres de pression (22, 23) du cylindre auxiliaire (12) peuvent être commandées parallèlement à des chambres de pression (20, 21) du cylindre à trois positions (11),
**caractérisé en ce que**
le cylindre à trois positions (11) est réalisé sous forme étagée et présente seulement un piston d'entraînement (17) qui est disposé de manière à pouvoir coulisser sur le piston principal (13), et le cylindre auxiliaire (12) ne présentant pas de piston d'entraînement.

2. Cylindre à trois positions selon la revendication 1, **caractérisé en ce que** le système fluidique comprend seulement deux tiroirs de distribution (26, 27).

3. Cylindre à trois positions selon la revendication 1 ou 2, **caractérisé par** le système fluidique, de telle sorte que l'amplification par le piston auxiliaire (15) soit seulement active lors du démarrage à partir de deux positions de fin de course du cylindre à trois positions, mais pas lors du démarrage à partir d'une position centrale.

4. Procédé de commande d'un cylindre à trois positions selon l'une quelconque des revendications précédentes, **caractérisé en ce que** le cylindre à trois positions (11) et le cylindre auxiliaire (15) dans le cylindre auxiliaire (12) sont sollicités avec une pression de fluide en même temps et dans la même direction.
